# EUROPÄISCHE PATENTSCHRIFT

(11) **EP 2 447 401 B1**
(45) Veröffentlichungstag und Bekanntmachung des Hinweises auf die Patenterteilung: **01.07.2015**
(21) Anmeldenummer: 11008576.8
(22) Anmeldetag: 26.10.2011
(51) Int. Cl.: B29C 70/20, D04H 3/08, D04H 3/04

(54) **Partiell fixiertes textiles Halbzeug**
Partially fixed textile semi finished product
Produit semi-fini textile fixé partiellement

(30) Priorität: 29.10.2010 DE 102010050079
(43) Veröffentlichungstag der Anmeldung: 02.05.2012
(73) Patentinhaber: Premium AEROTEC GmbH, 86179 Augsburg (DE)
(72) Erfinder: Kuntz, Julian, 86179 Augsburg (DE)
(74) Vertreter: Avenhaus, Beate

(56) Entgegenhaltungen:
- WO-A1-2008/148791
- US-A1- 2009 068 428

## Beschreibung

Die Erfindung betrifft ein textiles Halbzeug zur Herstellung eines Faserverbundbauteils, eine Vorrichtung zum Herstellen eines textilen Halbzeugs für die Anfertigung eines Faserverbundbauteils und ein Verfahren zum Herstellen eines textilen Halbzeugs, sowie die Verwendung eines textilen Halbzeugs.

Faserverbundbauteile werden insbesondere bei Luftfahrzeugen verwendet, da sie ein günstiges Verhältnis zwischen statischen Eigenschaften und Gewicht aufweisen. Faserverbundbauteile werden aber auch im Automobilbau und anderen Anwendungen aus diesen Gründen zunehmend interessant. Faserverbundbauteile weisen Hochleistungsfasem, beispielsweise Kohle- oder Glasfasern, auf, die in einer Matrixstruktur eingebettet sind. Bei der Anfertigung eines Faserverbundbauteils werden die Hochleistungsfasem in Form textiler Halbzeuge zur Verfügung gestellt und entsprechend der Bauteilgeometrie zugeschnitten. Die Zuschnitte werden in eine Form eingelegt, bzw. auch auf eine Form aufgelegt, die in der Regel bereits die dreidimensionalen Abmessungen des fertigen Bauteils aufweist. Die in die Form eingelegten Zuschnitte werden als Preform bezeichnet. Der Begriff Preform bezieht sich auf zusammengefügte Trockenfaserhalbzeuge, wobei die Halbzeuge mit einem Binder versehen sein können, um die Verstärkungs- bzw. Hochleistungsfasem zur besseren Handhabung miteinander zu verbinden, die Preform fixieren zu können oder die Materialeigenschaften zu modifizieren. Nach Einlegen der Zuschnitte erfolgt eine Zugabe eines Matrixmaterials in die Form, in der Regel durch Einsaugen, Einspritzen oder Einpressen, und ein anschließendes Aushärten, beispielsweise unter Temperatur und Druck. Während des Aushärtens erfolgt eine Verbindung zwischen den Hochleistungsfasem und dem Matrixmaterial zu einem Faserverbundmaterial. Aus der DE 10250826B4 ist ein Verfahren zur Herstellung eines dreidimensionalen Preforms aus textilen Ausgangsmaterialien bekannt, bei dem die textilen Ausgangsmaterialien zweidimensional in einer Ebene abgelegt werden und anschließend durch Umformen bzw. Drapieren des zweidimensionalen Geleges die dreidimensionale Zielform des Preforms hergestellt wird. Es hat sich jedoch gezeigt, dass die Handhabung der Zuschnitte des textilen Halbzeugs aufgrund der Instabilität des Textils schwierig und dadurch arbeitsintensiv ist. Außerdem kann es zu Ungenauigkeiten beim Auflegen während der Zusammenstellung des Preforms kommen. Durch flächiges Aufbringen eines Binders auf dem Halbzeug lässt sich der Zuschnitt zwar leichter handhaben, jedoch eignet sich ein derartiges Halbzeug nicht mehr zur Verwendung bei komplexen Bauteilformen, da der Binder die Verformbarkeit einschränkt.

Es besteht daher ein Bedarf, ein textiles Halbzeug zur Verfügung zu stellen, das leicht handhabbar ist und sich für die Verwendung in komplexen Bauteilformen eignet.

Dies wird durch ein textiles Halbzeug, eine Vorrichtung zum Herstellen eines textilen Halbzeugs sowie ein Verfahren zur Herstellung eines textilen Halbzeugs und die Verwendung eines textilen Halbzeugs nach einem der unabhängigen Ansprüche erreicht.

Gemäß einer beispielhaften Ausführungsform der Erfindung ist ein textiles Halbzeug zur Herstellung eines Faserverbundteils vorgesehen, das eine Textilstruktur und eine Fixierungsstruktur aufweist. Die Textilstruktur weist eine erste Vielzahl von Verstärkungsfaserbündeln aus Hochleistungsfasem auf, wobei zwischen benachbarten Verstärkungsfaserbündeln Verschiebungsbereiche ausgebildet sind und benachbarte Verstärkungsfaserbündel gegeneinander verschiebbar sind Die Fixierungsstruktur fixiert die Verstärkungsfaserbündeln in Abhängigkeit von der Textilstruktur derart mit einem Fixierungsmuster, dass die Verstärkungsfaserbündel wenigstens teilweise fixiert sind und die Verschiebungsbereiche wenigstens teilweise frei bleiben.

Verstärkungsfaserbündel umfassen z.B. eine Vielzahl von einzelnen Kohle- oder Glasfasern, die zu einem Bündel zusammengefügt sind.

Gemäß einem weiteren Ausführungsbeispiel der Erfindung sind die Verstärkungsfaserbündel miteinander verbunden. Die Fixierungsstruktur weist einen Binder auf, der die Verstärkungsfaserbündel mit dem Fixierungsmuster wenigstens teilweise fixiert.

Gemäß einem weiteren Aspekt der Erfindung ist der Binder ein Pulver oder eine Flüssigkeit.

Gemäß einem weiteren Aspekt der Erfindung ist der Binder in einem Auftragungsmuster aufgetragen.

Gemäß einem weiteren Aspekt der Erfindung entspricht das Auftragungsmuster dem Fixierungsmuster.

Gemäß einem weiteren Aspekt der Erfindung sind die Verstärkungsfaserbündel parallel zueinander angeordnet.

Gemäß einem weiteren Aspekt der Erfindung sind die Verstärkungsfaserbündel miteinander verwoben oder in mehreren, in sich zwar parallelen, zueinander aber nicht parallelen Schichten vorliegen.

Gemäß einem weiteren Aspekt der Erfindung ist die Textilstruktur in einer ersten Ebene angeordnet, und die Fixierungsstruktur in einer zur ersten Ebene benachbarten zweiten Ebene.

Gemäß einem weiteren Aspekt der Erfindung liegt die Fixierungsstruktur an der Textilstruktur flächig an.

Gemäß einem weiteren Aspekt der Erfindung sind die Verschlebungsbereiche als Verschiebungszonen ausgebildet.

Gemäß einem weiteren Aspekt der Erfindung sind mehrere Lagen von Verstärkungsfaserbündeln vorgesehen, und die Fixierung erfolgt nur an den äußeren Lagen.

Gemäß einem weiteren Aspekt der Erfindung sind mehrere Lagen Verstärkungsfaserbündel vorgesehen, und die Fixierung ist sowohl an den äußeren Lagen als auch an einer oder mehreren inneren Lagen vorgesehen.

Gemäß einem weiteren Aspekt der Erfindung erfolgt die Fixierung durch die Fixierungsstruktur an den Verstärkungsfaserbündeln im Bereich der Mitte der Verstärkungsfaserbündel. Der Begriff "Mitte" bezieht sich z.B. auf die Mitte derjenigen Seitenfläche, an der die Fixierungsstruktur an dem jeweiligen Verstärkungsfaserbündel anliegt.

Gemäß einem weiteren Aspekt der Erfindung weist die Fixierungsstruktur eine Verbindungsstruktur auf, welche die Verstärkungsfaserbündel miteinander verbindet.

Gemäß einem weiteren Aspekt der Erfindung weist die Verbindungsstruktur eine Vielzahl von Verbindungselementen auf.

Gemäß einer beispielhaften Ausführungsform der Erfindung umfasst die Verbindungsstruktur eine zweite Vielzahl von Verbindungselementen, die einen Binder aufweisen. Die Verbindungselemente sind durch Aufschmelzen des Binders mit den Verstärkungsfaserbündeln verbunden.

Gemäß einem weiteren Aspekt der Erfindung sind die Verbindungselemente mit den Verstärkungsfaserbündeln verklebt.

Gemäß einem weiteren Aspekt der Erfindung weist die Fixierungsstruktur ein Schmelzmuster in Form des Fixierungsmusters auf.

Gemäß einem weiteren Aspekt der Erfindung sind die Verbindungselemente mit den Verstärkungsfaserbündeln mit einem Binder verbunden, dessen Verbundwirkung bzw. Klebewirkung durch Aufbringen von Druck aktiviert wird.

Beispielsweise kann auch ein Binder verwendet werden, der durch andere Einwirkungen seine Klebe- bzw. Verbindungswirkung entfaltet.

Gemäß einer beispielhaften Ausführungsform der Erfindung ist das Fixierungsmuster ein Linienmuster oder ein Punktmuster, das in Relation zur Textilstruktur ausgebildet ist.

Mit anderen Worten ist ein Fixierungsmuster vorgesehen, das durch die vorgegebene Struktur der zu einer Textilstruktur angeordneten Verstärkungsfaserbündel bedingt ist. Das Fixierungsmuster ist dabei unabhängig von Zuschnittsformen, d.h. unabhängig von seinem späteren Einsatz, ausgebildet.

Gemäß einem weiteren Aspekt der Erfindung ist die Textilstruktur ein Gewebe, bei dem sich Faserbündel überkreuzen.

Beispielsweise ist als Fixierungsmuster ein Punktmuster vorgesehen.

Gemäß einer beispielhaften Ausführungsform der Erfindung erstreckt sich das Fixierungsmuster über die gesamte Fläche des Halbzeugs. Das Fixierungsmuster ist also nicht nur für bestimmte Formen auf dem Halbzeug vorgesehen, sondern unabhängig davon und lediglich in direkter Abhängigkeit der Textilstruktur.

Gemäß einer beispielhaften Ausführungsform der Erfindung weist die Fixierungsstruktur eine Vielzahl von aufschmelzbaren Binderfäden auf.

Gemäß einem weiteren Aspekt der Erfindung weisen die aufschmelzbaren Binderfäden über ihre gesamte Länge Bindermaterial auf, das jedoch während des Aufbringens des Fixierungsmusters nur an denjenigen Stellen aktiviert wird, an denen eine Fixierung erfolgen soll.

Gemäß einer weiteren beispielhaften Ausführungsform der Erfindung weist die Fixierungsstruktur ein aufschmelzbares Bindervlies auf.

Gemäß einem weiteren Aspekt der Erfindung weist das aufschmelzbaren Bindervlies über seine gesamte (offene) Fläche Bindermaterial auf, das jedoch während des Aufbringens des Fixierungsmusters nur an denjenigen Stellen aktiviert wird, an denen eine Fixierung erfolgen soll.

Gemäß einem weiteren Aspekt der Erfindung sind aufschmelzbare Binderfäden mit einem aufschmelzbaren Bindervlies kombiniert vorgesehen.

Gemäß einer weiteren beispielhaften Ausführungsform der Erfindung ist die Fixierungsstruktur ein Binderpulver.

Beispielsweise kann auch eine Fixierungsstruktur unabhängig vom Binder existieren, die selbst nicht angeschmolzen wird, sondern über den Binder aktiviert wird für die Verbindung.

Der Binder wird zum Beispiel nur in den Bereichen der Faserbündel fixiert, an denen keine Verschiebungen auftreten, so dass er am wenigsten die Verformbarkeit beeinträchtigt.

Beispielsweise kann bei einem Vlies die Aufgabe, das Halbzeug zusammenzuhalten, vornehmlich von etwas anderem wahrgenommen werden, z.B. von einem Wirkfaden, der ein Multiaxialgelege in Dickenrichtung zusammenhält.

Gemäß einem Aspekt der Erfindung wird das Bindervlies auf der Textilstruktur fixiert, damit es nicht abfällt, aber eben so, damit dieses Bindervlies die Verformung nicht behindert. Das Textil für sich alleine würde aber auch ohne das Bindervlies zusammenhalten, da es eben noch eine andere Fixierungsstruktur hat, oder da es bei einem Gewebe aus miteinander verwobenen Verstärkungsfasern besteht. Bei dem Binderfaden ist es tatsächlich oft so, dass dieser auch das Textil zusammenhält, muss aber auch nicht unbedingt sein.

Gemäß einem Aspekt der Erfindung wird das Pulver zunächst flächig aufgebracht und dann nur an den Stellen des entsprechenden Musters fixiert.

Gemäß einem weiteren Aspekt der Erfindung verbleibt der un-fixierte Anteil des Pulvers dann auf dem Halbzeug.

Gemäß einem weiteren Aspekt der Erfindung erfolgt ein Entfernen des un-fixierten Anteils, zB. durch Absaugen, Abschütteln oder einfaches Abfallen des Pulvers. Gemäß einem Aspekt der Erfindung wird das Pulver nur genau in dem vorgesehenen Muster aufgebracht und an diesen Stellen fixiert.

Gemäß einem weiteren Aspekt der Erfindung wird das Bindermaterial in z.B. heißer, geschmolzener Form in dem entsprechenden Muster aufgebracht. Der Binder kann auch in anderer Form aufgebracht werden, beispielsweise in flüssiger oder zumindest viskoser Form, d.h. als zähe Masse, was z.B. durch Lösungsmittel erreicht werden kann.

Beispielsweise wird der Binder dabei nach einem Muster aufgebracht, das sich an der Textilstruktur orientiert, so dass die Verschiebungsbereiche frei bleiben.

Gemäß einem weiteren Aspekt der Erfindung weist das textile Halbzeug einen Binderanteil auf, der in einem späteren Verarbeitungsschritt zum Verbinden mehrerer Lagen Textil benötigt wird.

Die Erfindung bezieht sich auch auf die Verwendung eines textilen Halbzeugs nach einem der oberhalb beschriebenen Ausführungsformen.

Gemäß der Erfindung ist auch eine Vorrichtung zum Herstellen eines textilen Halbzeugs für die Anfertigung eines Faserverbundteils vorgesehen mit einer Einrichtung zum Zuführen eines textilen Halbzeugs und einer Einrichtung zum Aufbringen eines Fixierungsmusters. Das textile Halbzeug weist eine Textilstruktur und eine Fixierungsstruktur auf, wobei die Textilstruktur eine erste Vielzahl von Verstärkungsfaserbündeln aus Hochleistungsfasem aufweist. Zwischen benachbarten Verstärkungsfaserbündeln sind Verschiebungsbereiche ausgebildet, so dass die benachbarten Verstärkungsfaserbündel gegeneinander verschiebbar sind. Weiter ist eine Einrichtung zum Aufbringen eines Fixierungsmusters zur Fixierung der Verstärkungsfaserbündel vorgesehen, wobei das Fixierungsmuster in Abhängigkeit von der Textilstruktur ausgebildet ist, um die Verstärkungsfaserbündel derart zu fixieren, dass die Verstärkungsfaserbündel wenigstens teilweise fixiert sind und die Verschiebungsbereiche wenigstens teilweise frei bleiben.

Gemäß einem weiteren Aspekt der Erfindung sind die Verstärkungsfaserbündel parallel zueinander angeordnet. Beispielswise besteht die Textilstruktur aus einer Schicht mit ausschließlich parallel angeordneten Verstärkungsfasern.

Gemäß einem weiteren Aspekt der Erfindung weist die Textilstruktur mehrere Schichten mit unterschiedlicher Orientierung auf. Innerhalb einer Schicht sind die Fasern z.B. jeweils parallel, die Schichten untereinander sind aber nicht parallel.

Gemäß einem weiteren Aspekt der Erfindung sind die Verstärkungsfaserbündel miteinander verwoben oder in mehreren, in sich zwar parallelen, zueinander aber nicht parallelen Schichten vorliegen.

Das Fixierungsmuster dient der Verbindung der Fixierungsstruktur mit den Verstärkungsfaserbündeln, wobei das Fixierungsmuster in Abhängigkeit von der Textilstruktur ausgebildet ist, um die Fixierungsstruktur derart an den Verstärkungsfaserbündeln zu fixieren, dass Verschiebungsbereiche zwischen benachbarten Verstärkungsfaserbündeln ausgebildet werden, damit benachbarte Verstärkungsfaserbündel gegeneinander verschiebbar sind.

Gemäß einer beispielhaften Ausführungsform der Erfindung weist die Einrichtung zum Aufbringen des Fixierungsmusters Bereiche mit unterschiedlichen Temperaturen auf, wobei erste Bereiche mit höheren Temperaturen vorgesehen sind, die ein Aufschmelzen eines Binders bewirken, den die Verbindungselemente aufweisen, und zweite Bereiche mit niedrigeren Temperaturen, die ein Aufschmelzen des Binders verhindern bzw. ausschließen.

Gemäß einem Aspekt der Erfindung ist die Einrichtung zum Aufbringen des Fixierungsmusters eine Walze mit teilweise heißeren und kühleren Bereichen.

Für die Aufbringung des Pulvers oder der Bindermasse nur in einem bestimmten Muster kann die Walze auch so ausgebildet sein, dass sie nur an den heißen Stellen Binder aufnimmt und diesen dann nur an diesen Stellen auf das Textil aufbringt.

Die Walze kann auch vollständig heiß sein und nur an manchen Stellen tritt aus der Walze das Bindermaterial aus.

Gemäß einem weiteren Beispiel ist die Walze glatt und es wird auf einer dem Textil abgewendeten Seite Bindermaterial gemäß des Musters auf die Walze aufgebracht, z.B. aufgepinselt oder geträufelt, und das Bindermaterial wird dann nach Umdrehung der Walze auf das Textil aufgebracht.

Gemäß einem weiteren Aspekt der Erfindung wird durch die Walze auch Druck auf das textile Halbzeug ausgeübt. Beispielsweise wird durch die unterschiedlichen Temperaturbereiche auch unterschiedlicher Druck auf das textile Halbzeug ausgeübt.

Gemäß einem weiteren Aspekt der Erfindung bilden die heißeren und kühleren Bereiche ein lineares Muster, wobei die Linienstruktur in Umfangsrichtung der Walze radial angeordnet ist.

Gemäß einem weiteren Aspekt der Erfindung ist die Linienstruktur axial angeordnet, d.h. senkrecht zur Drehrichtung.

Gemäß einem weiteren Aspekt der Erfindung ist die Linienstruktur in einem Winkel zur Produktionsrichtung ausgebildet, zum Beispiel 30°, 45°, 60° oder in einem anderen Winkel.

Gemäß einem weiteren Aspekt der Erfindung bilden die heißeren und kühleren Bereiche ein punktförmiges Muster.

Die Erfindung bezieht sich auch auf die Verwendung eines textilen Halbzeugs nach einer der beschriebenen Ausführungsformen.

Gemäß der Erfindung ist auch ein Verfahren zur Herstellung eines textilen Halbzeugs zur Anfertigung eines Faserverbundteils vorgesehen, das die folgenden Schritte umfasst:
a) Zusammenstellen einer Textilstruktur aus einer ersten Vielzahl von Verstärkungsfaserbündeln aus Hochleistungsfasem, wobei zwischen benachbarten Verstärkungsfaserbündeln Verschiebungsbereiche ausgebildet sind und benachbarte Verstärkungsfaserbündel gegeneinander verschiebbar sind;
b) Anordnen einer Fixierungsstruktur auf der Textilstruktur; und
c) Fixieren der Verstärkungsfaserbündel mit der Fixierungsstruktur durch Aufbringen eines Fixierungsmusters In Abhängigkeit von der Textilstruktur, wobei die Fixierungsstruktur die Verstärkungsfaserbündel derart fixiert, dass die Verstärkungsfaserbündel wenigstens teilweise fixiert werden und die Verschiebungsbereiche wenigstens teilweise frei bleiben und z.B. benachbarte Verstärkungsfaserbündel gegeneinander verschoben werden können.

Beispielsweise werden die Verschiebungsbereiche zwischen benachbarten Verstärkungsfaserbündeln frei bzw. unfixiert gelassen. Benachbarte Verstärkungsfaserbündel können weiterhin gegeneinander verschoben werden.

Beispielsweise weist die Textilstruktur bereits Verschiebungszonen auf, nämlich zwischen benachbarten Faserbündeln. Durch die Fixierungsstruktur werden die Verschiebungsbereiche z.B. nicht erzeugt, sondern genau in diesem Bereich findet keine Fixierung statt. Die Verstärkungsfaserbündel selbst werden bei dem Prozess nicht verschoben, es gibt nur weiterhin die Möglichkeit, sie zu verschieben. Das Verschieben der Verstärkungsfaserbündel erfolgt dann z.B. bei der Ablage auf der Bauteilgeometrie. Würde das Halbzeug flächig fixiert werden, d.h. ohne die Verschiebungsbereiche, gäbe es diese Möglichkeit der Verschiebung nicht mehr, d.h. auch keine möglichst freie Verformbarkeit.

Gemäß einem Aspekt der Erfindung bezieht sich der Begriff "Auflegen" in Schritt b) auch auf andere Verfahren, bei denen die Fixierungsstruktur in einen möglichst flächigen Kontakt mit der Textilstruktur gebracht wird oder derart in unmittelbarer Nähe zur Textilstruktur positioniert wird, das anschließend das Verbinden nach Schritt c) erfolgen kann.

Die zuvor beschriebenen Aspekte zur Aufbringung der Fixierungsstruktur betreffen auch das Aufbringen eines Pulverbinders oder flüssigen Binders, wie bereits weiter oben näher erläutert.

Ein Kernaspekt der Erfindung besteht darin, dass ein textiles Halbzeug zur Verfügung gestellt wird, bei dem die einzelnen Verstärkungsfaserbündel zwar miteinander verbunden sind, und somit leichter handhabbar sind, jedoch die Fixierung in Abhängigkeit der Textilstruktur so ausgebildet ist, dass das textile Halbzeug noch verformbar ist. Bei der Verformung des textilen Halbzeugs finden Verschiebungen meistens nur an den Grenzstellen zwischen benachbarten Faserbündeln statt, die auch als Rovings bezeichnet werden. Dies ist auch dann der Fall, wenn diese Rovingstruktur gar nicht mehr unmittelbar sichtbar ist. Da gemäß der Erfindung vorgesehen ist, dass diese Verschiebungsstellen nicht fixiert werden, kann das Halbzeug verformt werden. Dies wird beispielsweise dadurch erreicht, dass ein Binder an den Verschiebungsstellen nur locker darüber liegt oder gar nicht vorhanden ist.

Ein Vorteil der Erfindung liegt darin, dass bei der Anfertigung eines Faserverbundbauteils das textile Halbzeug durch Zuschneiden in die erforderliche Zuschnittsform gebracht werden kann und danach unmittelbar leicht handhabbar in die Preform eingesetzt werden kann. Dabei eignet sich das erfindungsgemäße textile Halbzeug auch für die Verwendung bei komplexeren Bauteilformen, da sich das textile Halbzeug aufgrund der freigelassenen Verschiebungsbereiche auch an derartige Formen anpassen lässt. Ein an den jeweiligen Zuschnitt angepasstes Stabilisieren eines zugeschnittenen Textils ist nicht erforderlich.

Neben der besseren Handhabbarkeit ist gemäß einem weiteren Aspekt der Erfindung Binder vorgesehen, der bei der Preformherstellung verwendet wird, um nach einem Umformprozess, z.B. beim Auflegen auf Bauteilgeometrien, mehrere Lagen Textil miteinander zu verkleben. Beispielsweise soll der Binder vor dem Verkleben vorhanden sein, aber beim Umformen vor dem Verkleben möglichst wenig stören.

Gemäß einem weiteren Aspekt der Erfindung weisen die Binderfäden nur an denjenigen Stellen Bindermaterial auf, an denen es später während des Aufbringens des Fixierungsmusters auch zu einer Verbindung kommen soll.

Es sei darauf hingewiesen, dass die Merkmale der Ausführungsbeispiele des textilen Halbzeugs, der Vorrichtung zum Herstellen des textilen Halbzeugs auch für Ausführungsformen des Verfahrens sowie die Verwendung des textilen Halbzeugs gelten und umgekehrt.

Nachfolgend wird anhand der beigefügten Zeichnungen näher auf ein Ausführungsbeispiel der Erfindung eingegangen. Es zeigen:
Fig. 1 einen Querschnitt durch ein textiles Halbzeug gemäß der Erfindung;
Fig. 2 eine schematische Aufsicht auf das textile Halbzeug nach Fig. 1;
Fig. 3 einen Querschnitt durch ein weiteres Ausführungsbeispiel eines textilen Halbzeugs gemäß der Erfindung;
Fig. 4 eine schematische Aufsicht auf das textile Halbzeug nach Fig. 3;
Fig. 5 zeigt ein weiteres Ausführungsbeispiel eines Fixierungsmusters gemäß der Erfindung;
Fig. 6 zeigt ein weiteres Ausführungsbeispiel eines Fixierungsmusters gemäß der Erfindung;
Fig. 7 zeigt ein weiteres Ausführungsbeispiel eines Fixierungsmusters gemäß der Erfindung;
Fig. 8 eine Vorrichtung zum Herstellen eines textilen Halbzeugs gemäß der Erfindung; und
Fig. 9 Verfahrensschritte eines erfindungsgemäßen Verfahrens zur Herstellung eines textilen Halbzeugs

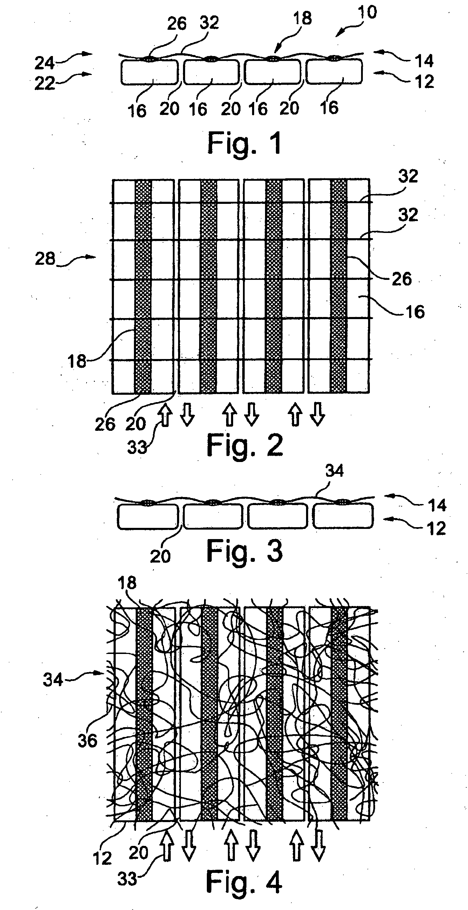

In Fig. 1 ist ein textiles Halbzeug 10 zur Herstellung eines Faserverbundbauteils gezeigt. Das textile Halbzeug weist eine Textilstruktur 12 und eine Fixierungsstruktur 14 auf.

Wie in Fig. 1 schematisch angedeutet ist, weist die Textilstruktur 12 eine erste Vielzahl von Verstärkungsfaserbündeln 16 aus Hochleistungsfasern auf. Die Hochleistungsfasem, beispielsweise Kohlefasern oder Glasfasern, sind schematisch in einer rechteckigen Querschnittsform gezeigt. Es sei darauf hingewiesen, dass die Verstärkungsfaserbündel 16 auch einen wesentlich flacheren Querschnitt aufweisen können, und insbesondere eine von einem Rechteck abweichende Querschnittsform.

Die Verstärkungsfaserbündel sind beispielsweise im Wesentlichen parallel zueinander angeordnet. Beispielsweise erfolgt die Anordnung in einem regelmäßigen Abstand bzw. Abstandsmaß.

Gemäß einem weiteren Aspekt (nicht gezeigt) können die Verstärkungsfaserbündel aber auch miteinander verwoben sein oder in mehreren in sich parallelen Schichten mit unterschiedlicher Orientierung übereinander liegen, z.B. als Multiaxialgelege.

Die Fixierungsstruktur 14 verbindet die Verstärkungsfaserbündel 16 miteinander.

In dem in Fig. 1 gezeigten Ausführungsbeispiel ist die Fixierungsstruktur 14 in Abhängigkeit von der Textilstruktur 12 derart an den Verstärkungsfaserbündeln 16 mit einem Fixierungsmuster 18 fixiert, das in Fig. 2 näher erläutert wird. Die Fixierung ist derart vorgesehen, dass Verschiebungsbereiche 20 zwischen benachbarten Verstärkungsfaserbündeln ausgebildet sind und benachbarte Verstärkungsfaserbündel 16 gegeneinander verschiebbar sind.

In Fig. 1, und auch in Fig. 2 bis 4, sind die Verschiebungsbereiche 20 als freie Verschiebungszonen dargestellt. Diese Verschiebungsbereiche 20 können jedoch auch nicht unmittelbar sichtbar vorhanden sein, z.B. dann, wenn die Verstärkungsfaserbündel 16 direkt aneinander anliegen, wobei dann jedoch immer noch eine Verschiebung zueinander möglich ist.

Gemäß einem weiteren Aspekt der Erfindung kann die Textilstruktur 12 in einer ersten Ebene 22 angeordnet sein und die Fixierungsstruktur 14 in einer zur ersten Ebene 22 benachbarten zweiten Ebene 24.

Beispielsweise liegt die Fixierungsstruktur flächig an der Textilstruktur an.

In dem in Fig. 1 im Querschnitt gezeigten Ausführungsbeispiel ist die Fixierungsstruktur 14 an den Verstärkungsfaserbündeln 16 ungefähr im Bereich der Mitte, mit Bezugsziffer 26 gekennzeichnet, der Verstärkungsfaserbündel 16 fixiert. Wie ersichtlich ist, bezieht sich der Begriff "Mitte" auf die Mitte der Seitenfläche. Dadurch wird erreicht, dass sich die Verstärkungsfaserbündel möglichst frei zueinander verschieben lassen, um die Verformbarkeit des textilen Halbzeugs 10 zu gewährleisten.

In Fig. 2 ist in einer Aufsicht auf das textile Halbzeug 10 aus Fig. 1 zu erkennen, dass die Verbindung zwischen der Textilstruktur 12 und der Fixierungsstruktur 14 in einem Linienmuster 28 vorgesehen ist. Wie ersichtlich ist, wird das Linienmuster 28 durch die darunter liegende Textilstruktur 12 definiert. Das Linienmuster 28 ist in Relation zu der Textilstruktur 12 ausgebildet.

Gemäß einem weiteren Ausführungsbeispiel ist das Fixierungsmuster 18 ein Punktmuster 30, das ebenfalls in Relation zur Textilstruktur 12 ausgebildet ist. Gemäß einem weiteren Aspekt der Erfindung weist die Fixierungsstruktur eine zweite Vielzahl von Verbindungselementen 31 auf.

Gemäß dem Ausführungsbeispiel nach Fig. 1 und Fig. 2 weist die Fixierungsstruktur 14 eine Vielzahl von aufschmelzbaren Binderfäden 32 als Verbindungselemente 31 auf. Die Binderfäden 32 sind in dem gezeigten Ausführungsbeispiel senkrecht zur Faserrichtung der Verstärkungsfaserbündel 16 angeordnet. Dadurch, dass die Binderfäden 32 die Verstärkungsfaserbündel 16 nur in deren Mittelzone 26 fixieren, lassen sich die Verstärkungsfaserbündel 16 gegeneinander verschieben, wodurch sich eine gute Verformbarkeit des textilen Halbzeugs ergibt. Die Verschiebungsmöglichkeit ist mittels Pfeile 33 angedeutet.

In Fig. 2 sind die Binderfäden mit deutlichem Abstand zueinander gezeigt. Daraus ergibt sich streng genommen ein punktförmiges Fixierungsmuster. Werden die Binderfäden enger angeordnet, wandern die Punkte zu den Linien zusammen, die in Fig. 2 mit 26 gekennzeichnet sind.

Da jedoch gemäß einem Aspekt der Erfindung vorgesehen sein kann, dass das Fixierungsmuster mit Walzen aufgebracht wird, erfolgt eine Einwirkung entlang der in Fig. 2 mit 26 gekennzeichneten Streifen.

Gemäß einem (nicht näher gezeigten) Aspekt der Erfindung können die Verbindungselemente, z.B. die Binderfäden auch schräg zur Faserrichtung der Verstärkungsfaserbündel verlaufen.

Gemäß des in Fig. 3 und Fig. 4 gezeigten Ausführungsbeispiels weist die Fixierungsstruktur 14 ein aufschmelzbares Bindervlies 35 auf.

In der Aufsicht in Fig. 4 ist schematisch dargestellt, dass das Bindervlies 34 eine Vielzahl ungerichteter Faserelemente 36 als Verbindungselemente 31 aufweist. Die Faserelemente 36 des Bindervlieses 34 sind mittels eines linearen Fixierungsmusters, das dem Fixierungsmuster 18 aus Fig. 2 entspricht, mit der Textilstruktur 12 verbunden. Auch bei diesem Ausführungsbeispiel ist durch die Verschiebungsbereiche 20 eine Verformbarkeit des textilen Halbzeugs 10 bei gleichzeitig einfachem Handling gewährleistet.

Selbstverständlich wäre auch ein punktförmiges Fixierungsmuster bei Verwendung eines Bindervlieses möglich, was jedoch nicht näher dargestellt ist.

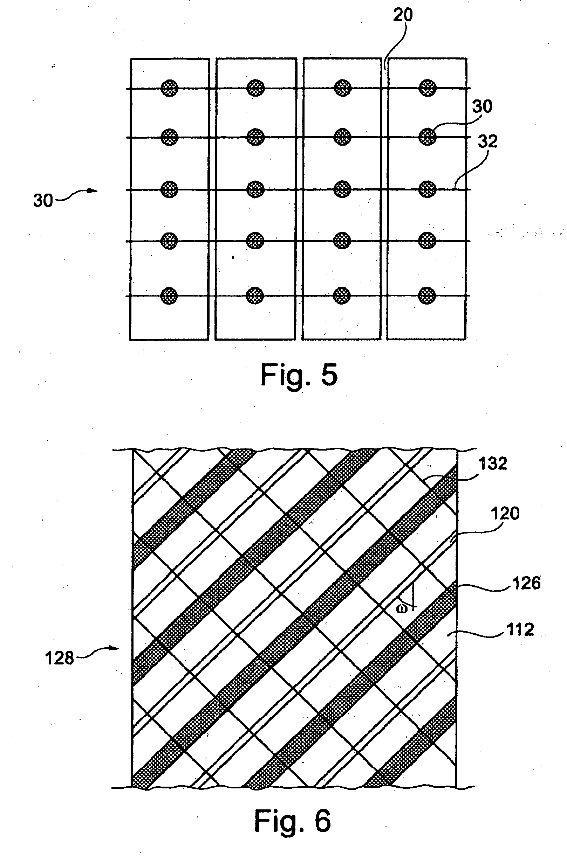

In Fig. 5 ist in einer schematischen Aufsicht ein Fixierungsmuster 18 gezeigt, das als Punktmuster 30 ausgebildet ist.

Fig. 6 zeigt ein weiteres Ausführungsbeispiel für ein Linienmuster 128, das in Relation zur Textilstruktur 12 ausgebildet ist. Wie schematisch angedeutet, ist die Textilstruktur 12 in einem Winkel W zur Produktionsrichtung angeordnet, beispielsweise mit einem Winkel W von 45°. Um die Verschiebbarkeit der Verstärkungsfaserbündel 16 zu gewährleisten, sind auch hier Verschiebungsbereiche 120 in der Textilstruktur 112 vorgesehen. Die Verbindung wird dadurch gewährleistet, dass die Fixierungsstruktur 14, die ebenfalls in dem Winkel W angeordnet ist, beispielsweise mittels aufschmelzbarer Binderfäden 132 die Verstärkungsfaserbündel miteinander verbindet im Bereich der Mitte 126.

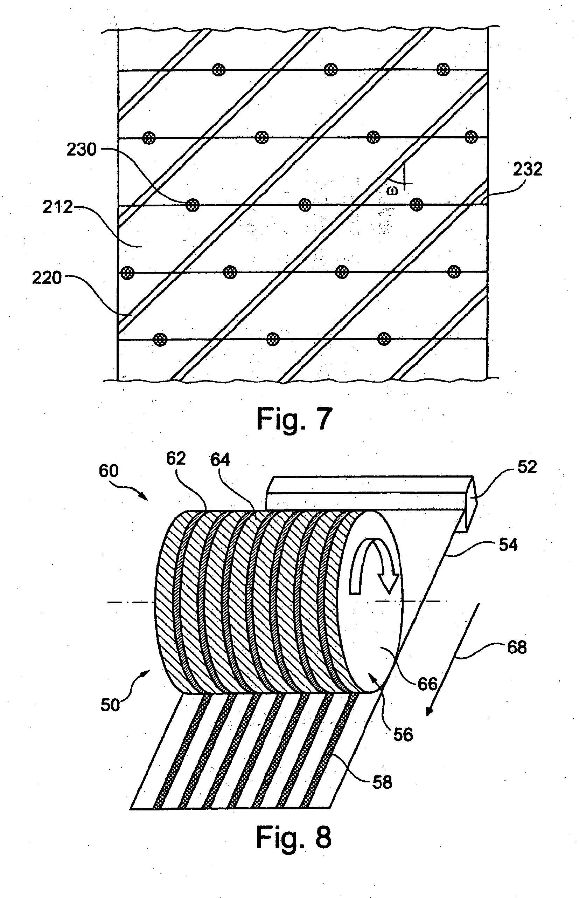

In Fig. 7 ist in einem Ausführungsbeispiel ein weiteres Punktmuster 230 gezeigt, das ebenfalls in Relation zur Textilstruktur ausgebildet ist. Wie ersichtlich ist, ist eine Textlistruktur 212 vorgesehen, die in dem Winkel W von ca. 30° zur Produktionsrichtung ausgebildet ist. Dementsprechend weisen auch die Verschiebungsbereiche 220 einen derartigen Winkel auf. Die Verbindung erfolgt beispielsweise mittels Binderfäden 232, die in dem gezelgten Beispiel senkrecht zur Produktionsrichtung verlaufen, d.h. in einem Winkel zu den Verschiebungsbereichen 220.

Es sei darauf hingewiesen, dass die in Fig. 5 bis 7 gezeigten Ausführungsbeispiele für weitere Fixierungsmuster neben der dargestellten Binderfäden auch mit einem aufschmelzbaren Bindervlies ausgebildet sein können.

Gemäß einem nicht gezeigten Ausführungsbeispiel ist die Fixierungsstruktur ein aufgebrachtes Binderpulver.

In Fig. 8 ist in einer schematischen Perspektivdarstellung eine Vorrichtung 50 zum Herstellen eines textilen Halbzeugs für die Anfertigung eines Faserverbundbauteils dargestellt. Die Vorrichtung 50 weist eine Einrichtung 52 zum Zuführen eines textilen Halbzeugs 54 mit einer Textilstruktur und einer Fixierungsstruktur auf. Das textile Halbzeug 54 ist als textiles Halbzeug gemäß einer der vorhergehenden Ausführungsbeispiele ausgebildet. Die Textilstruktur weist eine erste Vielzahl von Verstärkungsfaserbündeln aus Hochleistungsfasem auf, die parallel zueinander angeordnet sind. Außerdem ist eine Einrichtung 56 zum Aufbringen eines Fixierungsmusters 58 zur Verbindung der Fixierungsstruktur mit den Verstärkungsfaserbündeln vorgesehen. Das Fixierungsmuster 58 ist in Abhängigkeit von der Textilstruktur ausgebildet, um die Fixierungsstruktur derart an den Verstärkungsfaserbündeln zu fixieren, dass Verschiebungsbereiche zwischen benachbarten Verstärkungsfaserbündeln ausgebildet werden, damit benachbarte Verstärkungsfaserbündel gegeneinander verschiebbar sind.

Gemäß einem Aspekt der Erfindung weist die Einrichtung zum Aufbringen des Fixierungsmusters Bereiche 60 mit unterschiedlichen Temperaturen auf. Dabei sind erste Bereiche 62 mit höheren Temperaturen vorgesehen, die ein Aufschmelzen eines Binders bewirken, den die Verbindungselemente aufweisen. Außerdem sind zweite Bereiche 64 vorgesehen, die niedrigere Temperaturen aufweisen, die ein Aufschmelzen des Binders verhindern.

Beispielsweise ist die Einrichtung 56 zum Aufbringen des Fixierungsmusters 58 eine Walze 66 mit teilweise heißeren und kühleren Bereichen.

In dem in Fig. 8 gezeigten Ausführungsbeispiel ist das Fixierungsmuster ein Linienmuster, und die Walze 66 weist ein lineares Muster der heißeren und kühleren Bereiche auf, das in Umfangsrichtung radial angeordnet ist.

Da das Fixierungsmuster 54 immer in Relation zur Textilstruktur ausgebildet ist, ist gemäß einem weiteren (nicht gezeigten) Ausführungsbeispiel vorgesehen, dass bei einer Textilstruktur 12 senkrecht zur Textilproduktionsrichtung, die mit einem Pfeil 68 angedeutet ist, d.h. bei senkrecht zur Textilproduktionsrichtung 68 verlaufenden Verstärkungsfaserbündeln 16, die Walze 66 eine Linienstruktur aufweist, die auf der Umfangsfläche axial angeordnet ist, d.h. senkrecht zur Drehrichtung.

Gemäß einem weiteren Ausführungsbeispiel der Erfindung (nicht gezeigt) ist vorgesehen, dass die Walze ein Punktmuster von heißeren und kühleren Bereichen aufweist, d.h., die heißeren Bereiche sind punktförmig verteilt angeordnet, um ein punktförmiges Fixierungsmuster aufzubringen.

Gemäß einem weiteren Aspekt der Erfindung kann statt einer Walze auch eine Vorrichtung verwendet werden, die eine Vielzahl kleinerer Walzen aufweist, um ein entsprechendes Fixierungsmuster vorzusehen.

Gemäß einem weiteren Aspekt der Erfindung können statt Walzen auch andere für die Aufbringung eines Fixierungsmusters geeignete Vorrichtungen vorgesehen sein; beispielsweise punktförmig einwirkende Stempel, die sich bei einem sich durchgängig gleichmäßig bewegenden textilen Halbzeugs streckenweise mitbewegen oder, bei einem sich stockend bewegenden Textil, d.h. bei einem kurzfristig angehaltenen Bewegungsablauf, bei der Durchführung des textilen Halbzeugs stationär einwirkende Stempel.

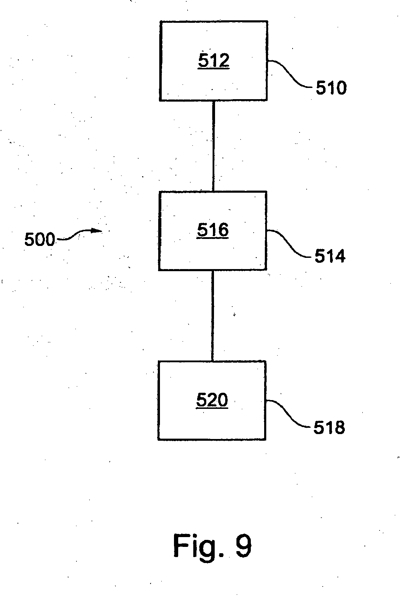

In Fig. 9 ist ein Verfahren 500 zur Herstellung eines textilen Halbzeugs zur Anfertigung eines Faserverbundbauteils gezeigt, das die folgenden Schritte umfasst: In einem ersten Zusammenstellungsschritt 510 wird eine Textilstruktur 512 aus einer ersten Vielzahl von Verstärkungsfaserbündeln aus Hochleistungsfasem zusammengestellt, wobei die Verstärkungsfaserbündel zum Beispiel parallel zueinander angeordnet sind. Anschließend erfolgt ein Anordnen 514 einer Fixierungsstruktur 516 auf der Textilstruktur. Danach ist in einem Fixierungsschritt 518 vorgesehen, dass die Verstärkungsfaserbündel mit der Fixierungsstruktur durch Aufbringen eines Fixierungsmusters 520 in Abhängigkeit von der Textilstruktur fixiert werden, wobei die Fixierungsstruktur derart an den Verstärkungsfaserbündeln fixiert wird, dass die Verstärkungsfaserbündel wenigstens teilweise fixiert werden und die Verschiebungsbereiche wenigstens teilweise frei bleiben.

Der Zusammenstellungsschritt 510 wird auch als Schritt a) bezeichnet, der Anordnungsschritt 514 als Schritt b) und der Fixierungsschritt 518 als Schritt c).

Gemäß einem Aspekt der Erfindung wird ein Binder lokal derart auf dem Halbzeug, d.h. der Textilstruktur, fixiert, wo es für das Ermöglichen von Verschiebungen zur Verformung am wenigsten hinderlich ist. Erfindungsgemäß ist dies vor allem in der Mitte der Verstärkungsfaserbündel vorgesehen. Wie bereits dargestellt, werden die Bereiche zwischen Faserbündeln, an denen Verschiebungen stattfinden, nicht verklebt, d.h., dort wird kein Binder aufgebracht bzw. ein darüber verlaufendes Binderelement, beispielsweise ein Binderfaden oder ein Bindervlies, wird an diesen Stellen nicht verbunden beispielsweise durch Aufschmelzen, um ein Verkleben an diesen Stellen zu unterbinden. Das Schmelzmuster bzw. Fixierungsmuster orientiert sich dabei nicht an Bauteil- oder Zuschnittsgeometrien, sondern an der Halbzeugstruktur und ist erfindungsgemäß auf dem Halbzeug überall gleich. Eventuelle sind die äußeren Ränder des bahnenförmigen Materials sowie die Anfangs- und End-Schnittkanten zur Handhabung bei Lagerung und Transport abweichend ausgebildet, z.B. steifer.

Die Stabilisierung ist demzufolge eine Eigenschaft des erfindungsgemäßen textilen Halbzeugs und braucht zu einem späteren Zeitpunkt, beispielsweise bei einem bauteilgebundenen Fertigungsprozess In beliebiger Form, nicht mehr aufgebracht zu werden.

Es sei darauf hingewiesen, dass mit der Definition, dass das Fixierungsmuster in Relation zur Textilstruktur ausgebildet sein muss, auch diejenigen Fälle gemeint sind, bei denen es aufgrund von, bei jeder Herstellung unvermeidlichen, Ungenauigkeiten zu einem Versatz bzw. zu einer Nichtübereinstimmung zwischen dem Fixierungsmuster und der Textilstruktur kommt. Beispielsweise kann es bei einem nicht ganz exakt abgestimmten Linienmuster durch ein sukzessives Versetzen bzw. zu einer Abweichung von der Mittelposition kommen. Nach einer gewissen Anzahl kommt es dann zu einer Anordnung eines Verbindungsbereichs in dem eigentlich als Verschiebungsbereich vorgesehenen Zwischenbereich und anschließend in der Folge wieder zu einer Annäherung an die Mittelposition. Auch bei derartigen Ungenauigkeiten ist jedoch gewährleistet, dass es bei der Mehrzahl der Nachbarzonen zwischen den Verstärkungsfaserbündeln zur Ausbildung eines Verschiebungsbereichs kommt, so dass die grundsätzliche Verformbarkeit gewährleistet ist, auch wenn es in dem ein oder anderen Verschiebungsbereich zu einer Fixierung kommt und dort eine Verschiebung dann eigentlich nicht mehr möglich ist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Textiles Halbzeug (10) zur Anfertigung eines Faserverbundbauteils, mit:
- einer Textilstruktur (12); und
- einer Fixierungsstruktur (14);
wobei die Textilstruktur eine erste Vielzahl von Verstärkungsfaserbündeln (16) aus Hochleistungsfasern aufweist; wobei benachbarte Verstärkungsfaserbündel zu einer Struktur angeordnet sind; wobei zwischen benachbarten Verstärkungsfaserbündeln Verschiebungsbereiche (20) ausgebildet sind und benachbarte Verstärkungsfaserbündel gegeneinander verschiebbar sind;
wobei die Fixierungsstruktur die Verstärkungsfaserbündel in Abhängigkeit von der Textilstruktur derart mit einem Fixierungsmuster (18) fixiert, dass die Verstärkungsfaserbündel wenigstens teilweise fixiert sind und die Verschiebungsbereiche (20) wenigstens teilweise frei bleiben; und
wobei das Fixierungsmuster (18) in direkter Abhängigkeit der Textilstruktur ausgebildet ist und sich an der Struktur der Verstärkungsfaserbündel orientiert.

2. Textiles Halbzeug nach Anspruch 1, wobei die Verstärkungsfaserbündel miteinander verbunden sind; wobei die Fixierungsstruktur einen Binder aufweist, der die Verstärkungsfaserbündel wenigstens teilweise fixiert.

3. Textiles Halbzeug nach Anspruch 1 oder 2, wobei die Fixierungsstruktur eine Verbindungsstruktur aufweist, welche die Verstärkungsfaserbündel miteinander verbindet; wobei die Verbindungsstruktur eine zweite Vielzahl von Verbindungselementen (31) umfasst, die einen Binder aufweisen; und wobei die Verbindungselemente durch Aufschmelzen des Binders mit den Verstärkungsfaserbündeln verbunden sind.

4. Textiles Halbzeug nach Anspruch 1, 2 oder 3, wobei das Fixierungsmuster ein Linienmuster (28) oder ein Punktmuster (30) ist, das in Relation zur Textilstruktur ausgebildet ist.

5. Textiles Halbzeug nach einem der vorhergehenden Ansprüche, wobei sich das Fixierungsmuster über die gesamte Fläche des Halbzeugs erstreckt.

6. Textiles Halbzeug nach einem der vorhergehenden Ansprüche, wobei die Fixierungsstruktur eine Vielzahl von aufschmelzbaren Binderfäden (32) und/oder ein aufschmelzbares Bindervlies (35) aufweist

7. Verwendung eines textilen Halbzeugs nach einem der vorhergehenden Ansprüche.

8. Vorrichtung (50), zum Herstellen eines textilen Halbzeugs für die Anfertigung eines Faserverbundbauteils, mit:
- einer Einrichtung (52) zum Zuführen eines textilen Halbzeugs (54) mit einer Textilstruktur und einer Fixierungsstruktur; wobei die Textilstruktur eine erste Vielzahl von Verstärkungsfaserbündeln aus Hochleistungsfasern aufweist; wobei benachbarte Verstärkungsfaserbündel zu einer Struktur angeordnet sind; wobei zwischen benachbarten Verstärkungsfaserbündeln Verschiebungsbereiche (20) ausgebildet sind und benachbarte Verstärkungsfaserbündel gegeneinander verschiebbar sind; und
- einer Einrichtung (56) zum Aufbringen eines Fixierungsmusters (58) zur Fixierung der Verstärkungsfaserbündel; wobei das Fixierungsmuster in Abhängigkeit von der Textilstruktur ausgebildet ist, um die Verstärkungsfaserbündel derart zu fixieren, dass die Verstärkungsfaserbündel wenigstens teilweise fixiert sind und die Verschiebungsbereiche (20) wenigstens teilweise frei bleiben; und
wobei das Fixierungsmuster (18) in direkter Abhängigkeit der Textilstruktur ausgebildet ist und sich an der Struktur der Verstärkungsfaserbündel orientiert.

9. Vorrichtung nach Anspruch 8, wobei die Einrichtung zum Aufbringen des Fixierungsmusters Bereiche (60) mit unterschiedlichen Temperaturen aufweist; wobei erste Bereiche (62) mit höheren Temperaturen vorgesehen sind, die ein Aufschmelzen eines Binders bewirken, den die Verbindungselemente aufweisen, und zweite Bereiche (64) mit niedrigeren Temperaturen, die ein Aufschmelzen des Binders verhindern.

10. Verfahren (500) zur Herstellung eines textilen Halbzeugs zur Anfertigung eines Faserverbundbauteils, umfassend die Schritte:
a) Zusammenstellen (510) einer Textilstruktur (512) aus einer ersten Vielzahl von Verstärkungsfaserbündeln aus Hochleistungsfasern; wobei benachbarte Verstärkungsfaserbündel zu einer Struktur angeordnet sind; wobei zwischen benachbarten Verstärkungsfaserbündeln Verschiebungsbereiche (20) ausgebildet sind und benachbarte Verstärkungsfaserbündel gegeneinander verschiebbar sind
b) Anordnen (514) einer Fixierungsstruktur (516) auf der Textilstruktur;
c) Fixieren (518) der Verstärkungsfaserbündel mit der Fixierungsstruktur durch Aufbringen eines Fixierungsmusters (520) in Abhängigkeit von der Textilstruktur;
wobei die Fixierungsstruktur die Verstärkungsfaserbündel derart fixiert, dass die Verstärkungsfaserbündel wenigstens teilweise fixiert werden und die Verschiebungsbereiche wenigstens teilweise frei bleiben; und
wobei das Fixierungsmuster (18) in direkter Abhängigkeit der Textilstruktur ausgebildet ist und sich an der Struktur der Verstärkungsfaserbündel orientiert.

## Claims

1. Semi-finished textile product (10) for producing a fibre-composite component, having:
- a textile structure (12); and
- a fixing structure (14);
wherein the textile structure has a first multiplicity of reinforcement-fibre bundles (16) of high-performance fibres; wherein adjacent reinforcement-fibre bundles are disposed to form a structure; wherein displacement regions (20) are configured between adjacent reinforcement-fibre bundles, and adjacent reinforcement-fibre bundles are displaceable in relation to one another;
wherein, depending on the textile structure, the fixing structure fixes the reinforcement-fibre bundles by way of a fixing pattern (18) in such a manner that the reinforcement-fibre bundles are at least partially fixed and the displacement regions (20) remain at least partially vacant; and
wherein the fixing pattern (18) is configured so as to be directly dependent on the textile structure and is geared to the structure of the reinforcement-fibre bundles.

2. Semi-finished textile product according to Claim 1, wherein the reinforcement-fibre bundles are interconnected; wherein the fixing structure includes a binder which at least partially fixes the reinforcement-fibre bundles.

3. Semi-finished textile product according to Claim 1 or 2, wherein the fixing structure has a connection structure which interconnects the reinforcement-fibre bundles; wherein the connection structure comprises a second multiplicity of connection elements (31) which include a binder; and wherein the connection elements are connected to the reinforcement-fibre bundles by fusing the binder.

4. Semi-finished textile product according to Claim 1, 2, or 3, wherein the fixing pattern is a linear pattern (28) or a punctiform pattern (30) which is configured in relation to the textile structure.

5. Semi-finished textile product according to one of the preceding claims, wherein the fixing pattern extends across the entire area of the semi-finished product.

6. Semi-finished textile product according to one of the preceding claims, wherein the fixing structure has a multiplicity of fusible binder threads (32) and/or a fusible non-woven binder (35).

7. Use of a semi-finished textile product according to one of the preceding claims.

8. Device (50) for manufacturing a semi-finished textile product for producing a fibre-composite component, having:
- an installation (52) for supplying a semi-finished textile product (54) having a textile structure and a fixing structure; wherein the textile structure has a first multiplicity of reinforcement-fibre bundles of high-performance fibres; wherein adjacent reinforcement-fibre bundles are disposed to form a structure;
wherein displacement regions (20) are configured between adjacent reinforcement-fibre bundles, and adjacent reinforcement-fibre bundles are displaceable in relation to one another; and
- an installation (56) for applying a fixing pattern (58) for fixing the reinforcement-fibre bundles; wherein the fixing pattern is configured so as to be dependent on the textile structure, in order to fix the reinforcement-fibre bundles in such a manner that the reinforcement-fibre bundles are at least partially fixed and the displacement regions (20) remain at least partially vacant; and
wherein the fixing pattern (18) is configured so as to be directly dependent on the textile structure and is geared to the structure of the reinforcement-fibre bundles.

9. Device according to Claim 8, wherein the installation for applying the fixing pattern has regions (60) with different temperatures; wherein first regions (62) having comparatively high temperatures which cause fusing of a binder which is included in the connection elements are provided and second regions (64) having comparatively low temperatures which prevent fusing of the binder are provided.

10. Method (500) for manufacturing a semi-finished textile product for producing a fibre-composite component, comprising the following steps:
a) assembling (510) a textile structure (512) from a first multiplicity of reinforcement-fibre bundles of high-performance fibres; wherein adjacent reinforcement-fibre bundles are disposed to form a structure; wherein displacement regions (20) are configured between adjacent reinforcement-fibre bundles, and adjacent reinforcement-fibre bundles are displaceable in relation to one another;
b) disposing (514) a fixing structure (516) on the textile structure;
c) fixing (518) the reinforcement-fibre bundles to the fixing structure by applying a fixing pattern (520) depending on the textile structure;
wherein the fixing structure fixes the reinforcement-fibre bundles in such a manner that the reinforcement-fibre bundles are at least partially fixed, and the displacement regions remain at least partially vacant; and
wherein the fixing pattern (18) is configured so as to be directly dependent on the textile structure and is geared to the structure of the reinforcement-fibre bundles.

## Revendications

1. Produit semi-fini textile (10) pour la fabrication d'un composant renforcé par des fibres, comprenant
- une structure textile (12) ; et
- une structure de fixation (14) ;
la structure textile présentant une première pluralité de faisceaux de fibres de renforcement (16) constitués de fibres à hautes performances ; des faisceaux de fibres de renforcement adjacents étant disposés de manière à former une structure ; des régions de déplacement (20) étant réalisées entre des faisceaux de fibres de renforcement adjacents et des faisceaux de fibres de renforcement adjacents pouvant être déplacés les uns par rapport aux autres ;
la structure de fixation fixant les faisceaux de fibres de renforcement en fonction de la structure textile avec un motif de fixation (18) de telle sorte que les faisceaux de fibres de renforcement soient fixés au moins en partie et que les régions de déplacement (20) restent au moins en partie libres ; et
le motif de fixation (18) étant réalisé directement en fonction de la structure textile et s'orientant suivant la structure des faisceaux de fibres de renforcement.

2. Produit semi-fini textile selon la revendication 1, dans lequel les faisceaux de fibres de renforcement sont reliés les uns aux autres ; la structure de fixation présentant un liant qui fixe au moins en partie les faisceaux de fibres de renforcement.

3. Produit semi-fini textile selon la revendication 1 ou 2, dans lequel la structure de fixation présente une structure de liaison qui relie les uns aux autres les faisceaux de fibres de renforcement ; la structure de liaison comprenant une deuxième pluralité d'éléments de liaison (31) qui présentent un liant ; et les éléments de liaison étant reliés aux faisceaux de fibres de renforcement par fusion du liant.

4. Produit semi-fini textile selon la revendication 1, 2 ou 3, dans lequel le motif de fixation est un motif linéaire (28) ou un motif ponctuel (30) qui est réalisé en rapport avec la structure textile.

5. Produit semi-fini textile selon l'une quelconque des revendications précédentes, dans lequel le motif de fixation s'étend sur toute la surface du produit semi-fini.

6. Produit semi-fini textile selon l'une quelconque des revendications précédentes, dans lequel la structure de fixation présente une pluralité de fils de liant fusibles (32) et/ou un voile de liant fusible (35).

7. Utilisation d'un produit semi-fini textile selon l'une quelconque des revendications précédentes.

8. Dispositif (50) pour fabriquer un produit semi-fini textile pour la fabrication d'un composant renforcé par des fibres, comprenant :
- un système (52) pour acheminer un produit semi-fini textile (54) avec une structure textile et une structure de fixation ; la structure textile présentant une première pluralité de faisceaux de fibres de renforcement constitués de fibres à hautes performances ; des faisceaux de fibres de renforcement adjacents étant disposés de manière à former une structure ; des régions de déplacement (20) étant réalisées entre des faisceaux de fibres de renforcement adjacents et des faisceaux de fibres de renforcement adjacents pouvant être déplacés les uns par rapport aux autres ; et
- un système (56) pour appliquer un motif de fixation (58) pour la fixation des faisceaux de fibres de renforcement ; le motif de fixation étant réalisé en fonction de la structure textile, afin de fixer les faisceaux de fibres de renforcement de telle sorte que les faisceaux de fibres de renforcement soient fixés au moins en partie et que les régions de déplacement (20) restent au moins en partie libres ; et
le motif de fixation (18) étant réalisé directement en fonction de la structure textile et s'orientant suivant la structure des faisceaux de fibres de renforcement.

9. Dispositif selon la revendication 8, dans lequel le système pour appliquer le motif de fixation présente des régions (60) de températures différentes ; des premières régions (62) de températures plus élevées étant prévues, lesquelles provoquent une fusion d'un liant, que les éléments de liaison présentent, et des deuxièmes régions (64) de plus basses températures qui empêchent une fusion du liant.

10. Procédé (500) pour la fabrication d'un produit semi-fini textile pour la fabrication d'un composant renforcé par des fibres, comprenant les étapes suivantes :
a) assemblage (510) d'une structure textile (512) à partir d'une première pluralité de faisceaux de fibres de renforcement constitués de fibres à hautes performances ; des faisceaux de fibres de renforcement adjacents étant disposés de manière à former une structure ; des régions de déplacement (20) étant réalisées entre des faisceaux de fibres de renforcement adjacents et des faisceaux de fibres de renforcement adjacents pouvant être déplacés les uns par rapport aux autres ;
b) disposition (514) d'une structure de fixation (516) sur la structure textile ;
c) fixation (518) des faisceaux de fibres de renforcement avec la structure de fixation par application d'un motif de fixation (520) en fonction de la structure textile ;
la structure de fixation fixant les faisceaux de fibres de renforcement de telle sorte que les faisceaux de fibres de renforcement soient fixés au moins en partie que les régions de déplacement restent au moins en partie libres ; et
le motif de fixation (18) étant réalisé directement en fonction de la structure textile et s'orientant suivant la structure des faisceaux de fibres de renforcement.
